# EUROPEAN PATENT APPLICATION

(11) **EP 2 654 380 A1**
(43) Date of publication of application: **23.10.2013**
(21) Application number: 12164669.9
(22) Date of filing: 18.04.2012
(51) Int. Cl.: H05B 37/02

(54) **Lamp with energy saving control**

(71) Applicant: ChengShih University of Science and Technology, Taipei 112 (TW); Bestshine Technologies Co., Ltd., Taipei 106 (TW); Chai, Yen-Hsin, Taipei 112 (TW)
(72) Inventor: Chai, Yen-Hsin, 112 Taipei (TW); Kao, Feng-Chang, 112 Taipei (TW); Chen, Guei-Ming, 112 Taipei (TW); Lin, Chia-Shin, 112 Taipei (TW); Lin, Chia-Ming, 112 Taipei (TW); Chen, Chia-Sheng, 112 Taipei (TW); Chen, Chia-Lin, 112 Taipei (TW); Liu, Yung-Chi, 112 Taipei (TW); Chang, Chi-Chieh, 112 Taipei (TW); Liu, I-Chien, 112 Taipei (TW)
(74) Representative: Lang, Christian

(57) **Abstract**

A lamp having energy saving controls, which include: a lighting unit, a control device coupled to this lighting unit, and signals from this control device are used to control the brightness levels of this lighting unit; a sensing device coupled to this control device, and when this sensing device senses an object or the object moves, it sends a signal to the control device, which adjusts the strength of the power supply accordingly; and a remote signal receiving device coupled to this control device, and when this remote signal receiving device receives a signal it generates a remote signal according to the signal received, and sends this signal to the control device, which adjusts the strength of the power supply accordingly.

## Description

### BACKGROUND OF THE INVENTION

### 1. Field of the invention

This invention relates to a lamp having energy saving controls, specifically a lamp having energy saving controls which can be controlled externally, enabling the lamp to differentiate and output different brightness levels.

### 2. Description of Related Art

In recent years, energy saving topics have continuously received attention. Therefore when manufacturers research products, besides increasing the quality and usability of the product, they also need to balance these with energy saving properties in order to meet consumer demands.

Current energy saving lighting units like LEDs or energy saving light bulbs, are already widely accepted in daily usage. But currently most energy saving lighting units only emphasize their low power use and brightness levels, and don't take into account their surrounding environment, human senses or don't remotely control the brightness based on the distance from the lighting unit and so on, and don't adjust and control the brightness according to actual changes in the environment and the distance of the human body from the lighting unit to save energy, resulting in wasting of energy and shortening the lifespan of the lamp.

Therefore, how to provide a lamp having energy saving controls, which can effectively save energy and increase the lifespan of the lighting unit, and moreover can remotely control the brightness of the lamp based on actual requirements, is a topic waiting for a solution by industry.

### SUMMARY OF THE INVENTION

One purpose of the present invention is to provide a lamp with energy saving controls, which can make/adjust the brightness levels of the lamp by receiving external control, so as to achieve the effect of energy saving and increase the lifespan of the lighting unit, and moreover this invention can remotely control the brightness of the lamp based on actual requirements, to enhance the usage efficiency of the lamp by saving energy.

Another purpose of the present invention is to provide a lamp with energy saving controls, which can be used to display whether the parking spaces are occupied filled or whether a vehicle is about to enter, and then control the vehicle access and enhance the vehicle parking efficiency.

To achieve the above purpose, the technical means of the present invention is to provide a lamp with energy saving controls which include: a lighting unit, a control device coupled to the lighting unit, and signals from the control device are used to control the brightness levels of the lighting unit; a sensing device coupled to the control device, and when the sensing device senses an object or the object moves, it sends a signal to the control device, which adjusts the strength of the power supply accordingly; and a remote signal receiving device coupled to the control device, and when the remote signal receiving device receives a signal it generates a remote signal according to the signal received, and sends the signal to the control device, which adjusts the strength of the power supply accordingly.

### BRIEF DESCRIPTION OF THE DRAWINGS

The invention, as well as its many advantages, may be further understood by the following detailed description and drawings in which:
FIG. 1 is the block diagram showing the lamps with energy-saving control of the present invention;
FIG. 2 is the operation flow chart showing the lamps with energy-saving control of the present invention; and
FIG. 3 is the schematic diagram showing the sensing range of the present invention.

### DETAILED DESCRIPTION OF THE INVENTION

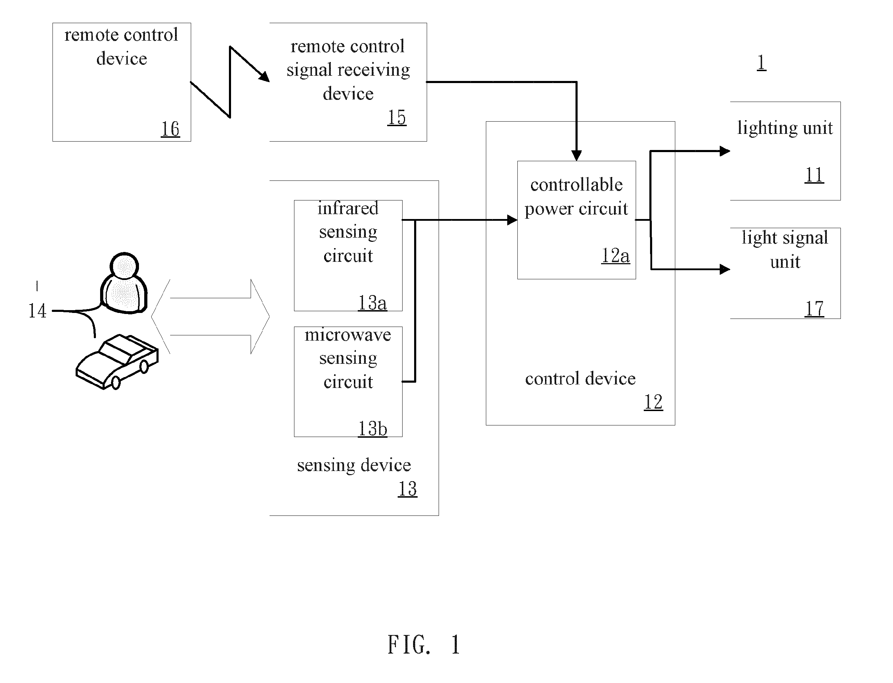

Please refer to FIG. 1, which is the lamp with energy saving control 1 of the present invention. The lamp with energy saving control 1 includes: a lighting unit 11 a control device 12, a sensing device 13 and a remote receiving device 15.

The control device 12 coupled to the lighting unit 11, is used to control the brightness level of the lighting unit 11 according to a power signal, and the power signal can be a voltage or a current. In addition, the control device 12 includes a controllable power circuit 12a which is used to generate the power signal to control the brightness level of the lighting unit 11.

The sensing device 13 coupled to the control device 12, which sends a sensing signal to the control unit 12 when the sensing device 13 senses an object 14 or the object moves, so as to adjust the power signal, and the object can be a human body or a vehicle, and in this invention the object can be any entity. Although the present invention only discloses a method to sense the human body using infrared sensing, one skilled in the art should be able to understand that the sensing device of the present invention can be applied to sense the person's body temperature, figure, and appearance , to sense whether the body or objects are close to the lamp with energy saving controls of the present invention.

In addition, the sensing device 13 further includes an infrared sensing circuit 13a, which is used for sensing the object and then generates the sensing signal. The sensing device 13 sends the sensing signal to the control device 12 and then controls the brightness of the lighting unit 11, which allows the brightness of the lighting unit 11 to stay at the state of full brightness when the sensing device 13 senses someone is there.

In addition, the sensing device 13 further includes a microwave sensing circuit 13b for sensing whether a parking space is occupied or not, so as to control a light signal unit 17 to turn on or off. In this embodiment, when the microwave sensing circuit 13b doesn't sense a vehicle in the parking space, the light signal unit 17 turns on, and when a vehicle parks in the parking space, the light signal unit 17 turns off. The lighting unit 11 and the light signal unit 17 are one selected from the following group consisting of: an LED, a light tube and an energy saving lamp.

The remote control signal receiving device 15 coupled to the control device 12, receives an instruction and generates a remote control signal according to the instructions, and when the control device receives the remote control signal, the power signal level is adjusted according to the remote control signal.

It must be noted that the instruction is sent by a remote control device 16, and the instruction includes one selected from the following group consisting of: a manual or automatic switching, a full brightness, a half brightness and turn off.

In other words, when the user sends the manual or automatic switching instruction by the remote control device, the lamp with energy saving control 1 will switch to manually control the remote control device 16 to control the brightness of the lighting unit 11 according to the manual or automatic switching instruction, or, switch to automatically sense the human body by the sensing device 13 so as to control the brightness of the lighting unit 11.

When the user sends instructions of full brightness, semi brightness or turning off by using the remote control device, this controls the brightness of the lighting unit as full brightness, semi brightness or turned off. Of course, one skilled in the art would know that the brightness level disclosed in the present invention is not just limited to the status of full brightness, semi brightness or turned off, according to actual requirements the brightness levels can also be adjusted to 1/3 brightness, 1/4 brightness or 1/5 brightness and so on.

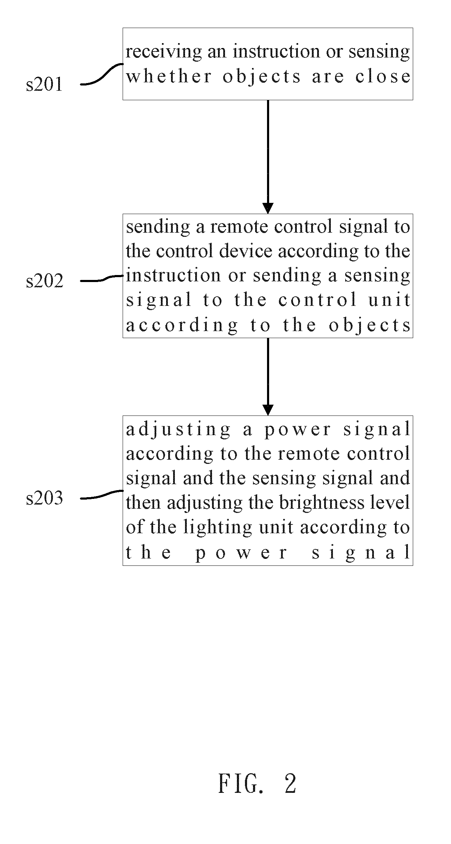

Please refer to FIG. 2, which is the operation flow chart showing the lamps with energy saving control 1 of the present invention. The steps include: first of all, receiving an instruction sent from the remote control device 16 or sensing by the sensing device 13 whether there are objects 14 close to the lamps with energy saving control (step s201). Then, the remote control signal receiving device 15 sends a remote control signal to the control device 12 according to the instructions, or the sensing device 13 sends a sensing signal to the control unit 12 according to the object 14 which is close (step s202).

Next, when the control device 12 receives the remote control signal or the sensing signal, this control device 12 adjusts the power signal according to the remote control signal and the sensing signal, and then according to the power signal adjusts the brightness level of the lighting unit (step 203). It is noted that the instructions include manual or automatic switching, a full brightness, a semi brightness and turned off.

In other words, when the user sends the manual or automatic switching instruction by the remote control device, the lamp with energy saving control 1 will switch to manually control the remote control device 16 to control the brightness of the lighting unit 11 according to the manual or automatic switching instruction, or, switch to automatically sense the human body by the sensing device 13 so as to control the brightness of the lighting unit 11.

When the user sends instructions of full brightness, semi brightness or turning off by the remote control device, this controls the brightness of the lighting unit as full brightness, semi brightness or turned off.

And the sensing device 13 sends the sensing signal to the control device 12 when sensing the human body so as to control the brightness of the lighting unit 11 as full brightness.

If the sensing device 13 does not sense anyone, then it turns off the lighting unit 11. Or when sensing whether a parking space is occupied or not, a light signal unit 17 is controlled so as to indicate as on or off. In this embodiment, when the microwave sensing circuit 13b of the sensing device 13 doesn't sense any vehicles in the parking spaces, it indicates on, and when sensing that vehicles are parked, it indicates off.

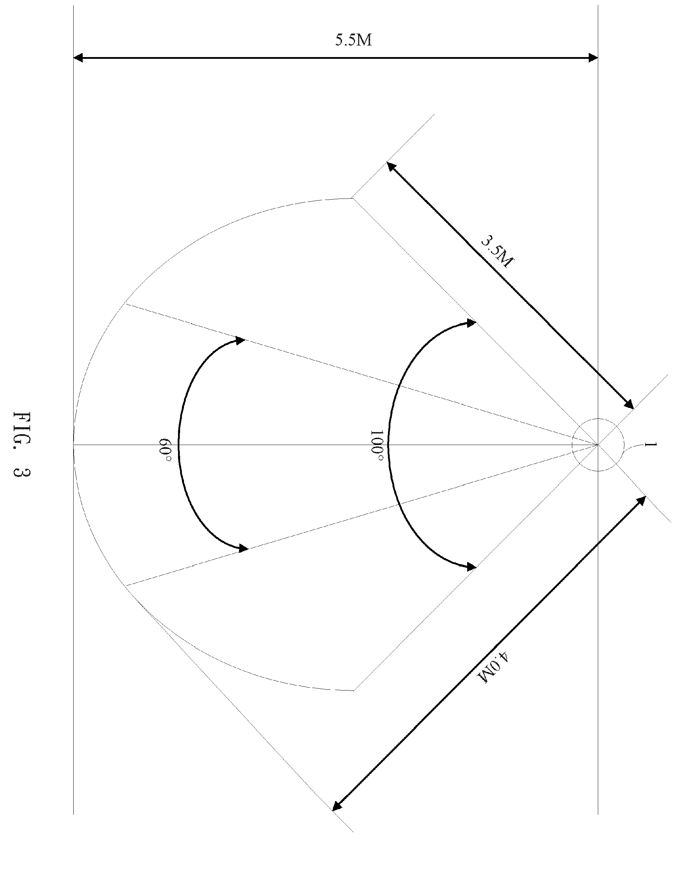

Moreover, in practical application, the maximum sensing range of the lamp with energy saving control of the present invention is 5.5 meters in a straight line. The maximum sensing range of the present invention is 4 meters in a fan-shaped area within the angle of 60 degrees, and the maximum sensing range of the present invention is 3.5 meters in a fan-shaped area within the angle of 100 degrees, such as shown in FIG. 3. The present invention can also be applied to the parking spaces, so as to regulate the flow of vehicle access, for example, the light signal unit 17 shows on or off to indicate whether the parking spaces are occupied or not.

In summary, the lamp with energy saving controls of the present invention is an energy saving system with the capability of receiving external control, and the main structure includes the control device (such as controllable power circuit), the sensing device (such as infrared sensing circuit), the lighting unit used for lighting and the structure of the lighting unit itself, and when the control unit receives the sensor signal or the remote control signal, it will adjust the output power signal (such as voltage or current), so as to output different brightness of the lighting unit to achieve the effect of energy saving.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. A lamp with energy saving controls, comprising:
a lighting unit;
a control device coupled to the lighting unit, and the control device controlling brightness levels of the lighting unit according to a power signal level;
a sensing device coupled to the control device, and when the sensing device senses an object or the object moves, it sends a sensing signal to the control device, which adjusts the power signal level accordingly; and
a remote signal receiving device coupled to the control device, and when the remote signal receiving device receives an instruction signal, it generates a remote signal to the control device according to the instruction signal received, so as to adjust the power signal level accordingly.

2. The lamp with energy saving controls of claim 1, wherein the control device further comprises a controllable power circuit, which is used to generate the power signal so as to control the brightness levels of the lighting unit.

3. The lamp with energy saving controls of claim 1, wherein the object is one of a human body and a vehicle.

4. The lamp with energy saving controls of claim 3, wherein when the sensing device senses a human body, it sends the sensing signal to the control device, and the control device adjusts the power signal level to the lighting unit according to the sensing signal, and adjusts a brightness of the lighting unit as full bright, otherwise, turns off the lighting unit.

5. The lamp with energy saving controls of claim 4, wherein the sensing device further comprises an infrared sensing circuit for sensing the object and then generates the sensing signal.

6. The lamp with energy saving controls of claim 5, wherein the sensing device further comprises a microwave sensing circuit for sensing whether a parking space is occupied or not, so as to control a lighting mode of a light signal unit to indicate whether vehicles are parked in the parking space.

7. The lamp with energy saving controls of claim 6, wherein the lighting unit and the light signal unit are one selected from the following group consisting of: an LED, a light tube and a lamp with energy saving.

8. The lamp with energy saving controls of claim 1, wherein the instruction signal is sent by a remote control device, and the instruction signal is one selected from the following group consisting of: an instruction for switching to manual or automatic operation, an instruction for full bright, an instruction for semi-bright and an instruction for turning off.

9. The lamp with energy saving controls of claim 8, wherein when the remote control receiving device receives the instruction for switching to one of manual operation and automatic operation, then the lamp with energy saving controls respectively switches to the brightness level of the lighting unit controlled by the remote control receiving device, or switches to the brightness level of the lighting unit controlled by the sensing device.

10. The lamp with energy saving controls of claim 8, wherein when the remote control receiving device receives instructions showing one selected from the group consisting of: full bright, semi-bright and turned off, then the brightness of the lighting unit is respectively controlled as with one selected from the following group consisting of: full power, half power and zero power.
